(19) Europäisches Patentamt
European Patent Office
Office européen des brevets

(11) **EP 0 886 455 B1**

(12) **FASCICULE DE BREVET EUROPEEN**

(45) Date de publication et mention
de la délivrance du brevet:
**27.09.2006 Bulletin 2006/39**

(51) Int Cl.:
*H04Q 11/04* (2006.01)     *H04L 12/56* (2006.01)

(21) Numéro de dépôt: **98401502.4**

(22) Date de dépôt: **18.06.1998**

(54) **Procédé de gestion de largeurs de bandes allouées dans les réseaux locaux à accès partagés, protocole et filtre de mise en oeuvre**

Verfahren zur Steuerung von Bandbreitenzuordnung in lokalen Netzwerken mit gemeinsamem Zugriff, Protokoll und Filter zur Durchführung des Verfahrens

Method for controlling allocated bandwidths in shared access local area networks, protocol and filter for its implementation

(84) Etats contractants désignés:
**DE ES GB IE IT**

(30) Priorité: **19.06.1997 FR 9707667**

(43) Date de publication de la demande:
**23.12.1998 Bulletin 1998/52**

(73) Titulaire: **UNIVERSITE PIERRE ET MARIE CURIE (PARIS VI)**
**75252 Paris Cédex 05 (FR)**

(72) Inventeurs:
• **Bouyer, Manuel**
  **75013 Paris (FR)**
• **Horlait, Eric**
  **92300 Levallois (FR)**

(74) Mandataire: **Desaix, Anne et al**
**Ernest Gutmann - Yves Plasseraud S.A.S.**
**3, rue Auber**
**75009 Paris (FR)**

(56) Documents cités:
**EP-A- 0 693 840     WO-A-97/03189**

• **BAHK S ET AL: "PREVENTIVE CONGESTION CONTROL BASED ROUTING IN ATM NETWORKS" SERVING HUMANITY THROUGH COMMUNICATIONS. SUPERCOM/ICC, NEW ORLEANS, MAY 1 - 5, 1994, vol. VOL. 3, no. -, 1 mai 1994, pages 1592-1599, XP000438764 INSTITUTE OF ELECTRICAL AND ELECTRONICS ENGINEERS**
• **PARK K: "SELF-ORGANIZED MULTI-CLASS QOS PROVISION FOR ABR TRAFFIC IN ATM NETWORKS" PROCEEDINGS OF THE 1996 IEEE FIFTEENTH ANNUAL INTERNATIONAL PHOENIX CONFERENCE ON COMPUTERS AND COMMUNICATIONS, SCOTTSDALE, MAR. 27 - 29, 1996, no. CONF. 15, 27 mars 1996, pages 446-453, XP000594811 INSTITUTE OF ELECTRICAL AND ELECTRONICS ENGINEERS**

**Description**

L'invention se rapporte à la gestion des flux de données dans les réseaux de communication locaux à accès partagés, par exemple les réseaux connus sous les appellations Ethernet ou Token Ring, en interconnexion avec les réseaux étendus, tel qu'Internet.

La charge d'occupation d'un réseau local est classiquement gérée par découpage ou segmentation des capacités de transmission de celui-ci, l'administrateur de réseau allouant statistiquement ou dynamiquement des largeurs de bande en fonction de l'importance des charges des applications prévues aux différents postes du réseau et des ressources disponibles.

Le problème posé est de fournir à tout élément de réseau (réseau local, routeur, système d'applications) ou application d'un tel réseau la possibilité de transmettre, à tout instant, des flux de données avec une qualité de service supérieure, c'est-à-dire un taux d'erreur aussi faible que possible, et un délai de transmission minimal, quelle que soit la charge du flux de données de l'application à transmettre et l'état d'occupation du réseau et des autres éléments de réseau interconnectés.

Le niveau de la qualité de service fourni par les protocoles de l'état de la technique résulte directement de la capacité d'accueil du réseau, partagée de façon égalitaire entre tous les utilisateurs. Ce niveau correspond à celui communément appelé "best effort" ("au mieux" en langage anglo-saxon) qui est offert à tout flux de données sur le même réseau sans tenir compte des autres flux.

Des protocoles de gestion centralisée ont été développés pour gérer la transmission des données, tel que celui décrit dans l'article de Y. Bernet, R. Yavatkar et D. Hoffman, intitulé "a proposal for admission control over Internet", publié sur le réseau Internet par le IETF (initiales de Internet Engineering Task Force) sous la dénomination <draft-yavatkar-sbm-ethernet-03.txt>, dans sa version de février 1997. Ces protocoles sont désignés sous les initiales SBM (de "Subnet Bandwith Management", c'est-à-dire gestion des largeurs de bandes de sous-réseaux). La gestion obtenue par de tels protocoles reste totalement dépendante d'un site gestionnaire central dont le rôle est le partage des ressources disponibles en largeurs de bande. La gestion centralisée fragilise le fonctionnement des réseaux, en cas de faute ou de panne de ce site.

Un service de gestion localisée est décrit par exemple dans l'article de J. Wroclawski, intitulé "Specification of the Controlled-Load Network Element Service" publié sur l'Internet par le IETF sous la dénomination <draft-ietf-intersv-ctrl-load-svc-04.txt>, dans sa version de novembre 1996. Un tel service contrôle un ensemble de filtres de "token buckets" (signifiant : réservoirs à jetons en langage anglo-saxon) disposés à l'interface de chaque application d'un élément du réseau. Ce protocole permet de fournir de la bande passante par allocation de bandes via des files d'attente par lesquelles transitent les données en fonction des caractéristiques prédéterminées des "token buckets".

Ces protocoles sont dépendants d'autres mécanismes d'échange d'informations, comme par exemple le protocole RSVP (initiales de "Resource Reservation Setup Protocol" qui signifie : protocole de mise en réservation des ressources, en langage anglo-saxon).

La qualité de service d'une telle gestion à protocole décentralisé est sensiblement du type "best effort", les différentes applications partageant les mêmes ressources disponibles. Les paquets non conformes aux paramètres, traités en mode "best effort", sont au mieux différés, les débits sont limités à une valeur maximale et les paquets de dimension supérieure à cette valeur sont refusés.

Un tel protocole définit un service dit "à charge contrôlée" : il peut traiter les paquets non conformes aux paramètres du réservoir, retarder les paquets qui résultent de distorsions et qui peuvent être jugés non conformes afin de pouvoir "passer" le filtre; mais il refuse les paquets de données de dimension supérieure à la dimension de référence du réservoir. Au niveau de chaque élément du réseau, par exemple d'un réseau Ethernet, il est alors nécessaire de prévoir une valeur maximale des débits de flux de chaque application, sans garantir pour autant l'absence de collisions ni la perte de paquets d'informations.

Un filtre à « token buckets » comporte un réservoir à paramètres adaptés au mode « best effort », pour les flux de paquets de données standard, et des réservoirs à paramètres adaptés à chaque flux de paquets de données ayant des spécifications spéciales ou privilégiées, afin de permettre une mise en file d'attente et émission de ces différents flux en sortie des réservoirs en fonction des disponibilités du réseau.

Ces solutions ne résolvent pas le problème posé, en particulier elles ne permettent pas de gérer l'allocation des bandes en fonction de la charge d'occupation du réseau avec une qualité de service supérieure.

Le document « Preventive congestion control based routing in ATM networks » de BAHK S. et al., IEEE vol. 3, 01.05.94, p. 1592-1599, décrit une technique statique de contrôle connexion par connexion dans un réseau ATM, c'est-à-dire dans un réseau à accès réservé. Cette technique n'est pas transposable à la gestion des flux de données dans un réseau à accès partagé.

Pour résoudre ce problème, la présente invention propose de mettre en place un protocole de gestion décentralisé distribuant, à chaque instant, une allocation optimisée en adaptant la charge des flux des applications à transmettre aux largeurs de bande disponibles sur le réseau.

Plus précisément, l'invention concerne un procédé de gestion de largeurs de bandes allouées d'un réseau comprenant des postes d'applications, des bus de commutation et de transmissions de données, caractérisé en ce que, le réseau étant un réseau local à accès partagé comportant des filtres de « token buckets » en interface de sortie entre les postes d'application et le bus de transmission au réseau, le procédé comporte les étapes suivantes :

- chaque élément de réseau diffuse, vers chacun des autres éléments du réseau par liaisons à travers le protocole, des valeurs de paramètres de largeurs de bande réservées, pour le mode « best effort » et pour les modes priviliégiés, des flux de données à transmettre ;
- chaque élément de réseau détermine alors la valeur d'un paramètre de mesure de la largeur de bande disponible pour sa liaison, à partir d'une table des valeurs des paramètres transmises à l'étape précédente ;
- l'élément de réseau ajuste la valeur du paramètre de « best effort » en fonction de la variation du paramètre de largeur de bande disponible de façon à lui préserver une valeur positive ou nulle.

Ce procédé est compatible avec l'utilisation du protocole IP (Protocole d'Internet) pour les connexions du réseau local partagé à d'autres réseaux ou à des réseaux étendus. Ce procédé peut également tirer partie de l'utilisation RSVP avec lequel il est compatible.

Lors d'une requête de réservation, le procédé de gestion de l'invention peut comporter des étapes supplémentaires afin de décider l'acceptation ou le rejet des réservations correspondantes, comportant :

- la comparaison des valeurs des paramètres de "best effort" avec leur valeur minimale: un nouvel élément n'est pas admissible si tous les paramètres de "best effort" ont déjà été portés à leur valeur minimale $r_{min}$, car le paramètre de disponibilité $r_{fr}$ du nouvel élément est alors nécessairement négatif;
- l'acceptation de l'augmentation de réservation d'un flux privilégié $\Delta r$, si elle est inférieure ou égale au paramètre de disponibilité $r_{fr}$ de l'élément ;
- le refus de cette augmentation de réservation si elle vérifie la condition: $\Delta r > \Sigma(r_{pr} + r_{min})$
  au moins l'une des valeurs de disponibilité recalculées $r_{fr}$ reste négative après diminution des paramètres de "best effort".
  D'autres étapes supplémentaires peuvent être ajoutées afin de prendre en compte des situations particulières ou optimiser la répartition des réservations : .
- si deux éléments requièrent simultanément une même augmentation de réservation, ces requêtes peuvent être rejetées, alors qu'une seule aurait pu aboutir; il est possible de prévoir une relance aléatoire dans le temps des demandes de réservation ;
- dans le cas où la file d'attente en mode "best effort" est surchargée, une augmentation de $r_a$ par diminution du paramètre de disponibilité $r_{fr}$ peut être opérée, par exemple par mise à disposition de 50% de la valeur de $r_{fr}$ ;

- si la valeur réelle du paramètre de débit en mode "best effort" est sensiblement inférieur (par exemple plus de 10%) au paramètre de réservation $r_a$, une diminution de ce paramètre $r_a$ pour rester proche de sa valeur réelle permet d'utiliser en dynamique, c'est-à-dire en fonction des besoins, la bande disponible en mode "best effort" ;
- dans le cas où un risque de surcharge en mode "best effort" est raisonnablement prévisible, par exemple si de nombreux paquets en mode privilégié ne sont pas conformes aux formats des modes privilégiés dans une application particulière, ces paquets sont adressés en mode "best effort" si aucune diminution de $r_a$ n'est induite.

L'invention se rapporte également à une structure de filtres de "token buckets" particulière qui, en mode "best effort", comporte plusieurs files d'attente, par exemple deux files avec, respectivement, une priorité élevée pour les paquets d'une application particulière et non conformes et une faible priorité pour les paquets à traiter classiquement en mode "best effort".

L'invention concerne également un protocole de gestion distribué pour la mise en oeuvre du procédé de gestion des largeurs de bande. Ce protocole est un protocole purement distribué qui réalise un double échange d'informations entre chaque élément de réseau pour ajuster les paramètres des "token buckets" en vue d'optimiser la charge d'occupation du réseau.

Deux types de paramètres sont ajustés : ceux du réservoir du mode "best effort" et ceux des réservoirs des modes réservés, en modulant les paramètres d'un type par rapport à ceux de l'autre afin de pondérer l'allocation des ressources respectivement entre les flux de type "best effort" et les flux de type privilégié en fonction des besoins.

D'autres caractéristiques et avantages de l'invention ressortiront à la lecture de la description plus détaillée qui suit, accompagnée des dessins annexés qui représentent, respectivement :

- la figure 1, l'organisation du protocole distribué selon l'invention ;
- la figure 2, le schéma synoptique de l'architecture de base du procédé de gestion des charges de flux de données d'un réseau local partagé selon l'invention ;
- la figure 3, une variante de filtre de "token buckets" selon l'invention.

Dans un réseau étendu, un service à charge contrôlée est défini par la fourniture par chaque élément de réseau (routeur, réseau local ou système d'exploitation) de spécifications relatives aux caractéristiques des flux des paquets de données de chaque application à un protocole de gestion.

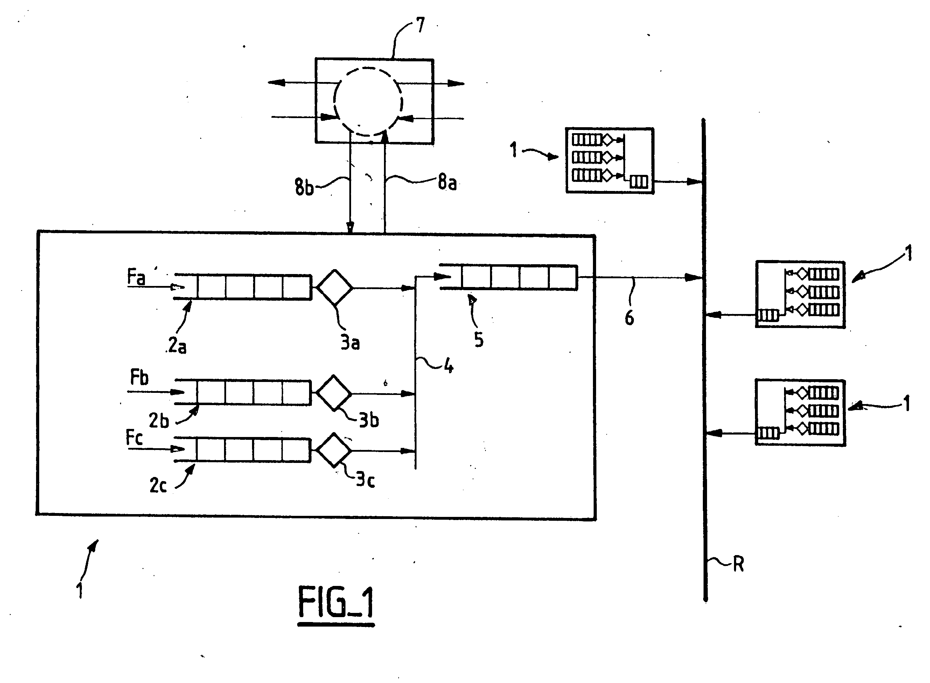

Comme illustré sur la figure 1, l'organisation distribuée du protocole selon l'invention utilise un classement des flux Fa, Fb, Fc de chaque application dans des filtres à "token buckets" 1 du type service à charge contrôlé, c'est-à-dire selon qu'ils appartiennent (Fa) au standard de qualité de service "best effort" ou qu'ils nécessitent (Fb, Fc) une qualité de service spéciale ou privilégiée: dans le premier cas, ils sont segmentés en paquets de format standard en file d'attente dans le registre 2a puis traités par le réservoir 3a. Dans le second cas, ils sont disposés en files d'attentes de format adapté dans des registres particuliers 2b, 2c, avant d'être traités par le réservoir correspondant 3b, 3c. Un bus de commutation 4, contrôlé par le protocole, assure la transmission vers le registre de sortie 5 en connexion avec le dispositif d'accès 6 au bus de réseau R.

Plus précisément, les spécifications des flux comportent l'évaluation des valeurs des paramètres des réservoirs 3a, 3b, ou 3c: débit des jetons $r_a$, $r_b$, ou $r_c$ (égal au rapport entre le nombre de jetons et leur durée de retour à l'état libre) et dimension (égale respectivement au nombre $n_a$, $n_b$, ou $n_c$ de jetons) du réservoir, pour chaque application concernée.

Le protocole 7 gère l'admission de chaque élément de réseau en fonction de la ressource disponible, c'est-à-dire la largeur de bande statistiquement disponible, sur la liaison de transmission 6.

L'invention fournit une qualité de service supérieure en utilisant un protocole purement distribué 7, réalisant un double échange d'informations 8a et 8b entre chaque application pour ajuster les paramètres des "token buckets" en vue d'optimiser la charge d'occupation du réseau.

Des règles d'ajustement des paramètres des "token buckets" gérées par le protocole permettent alors la transmission de données ayant tout type de spécifications. Selon l'invention, deux types de paramètres sont ajustés : ceux du réservoir du mode "best effort" et ceux des réservoirs des modes privilégiés, en modulant les paramètres d'un type par rapport à ceux de l'autre afin de pondérer l'allocation des ressources respectivement entre les flux de type "best effort" et les flux de type privilégié en fonction des besoins.

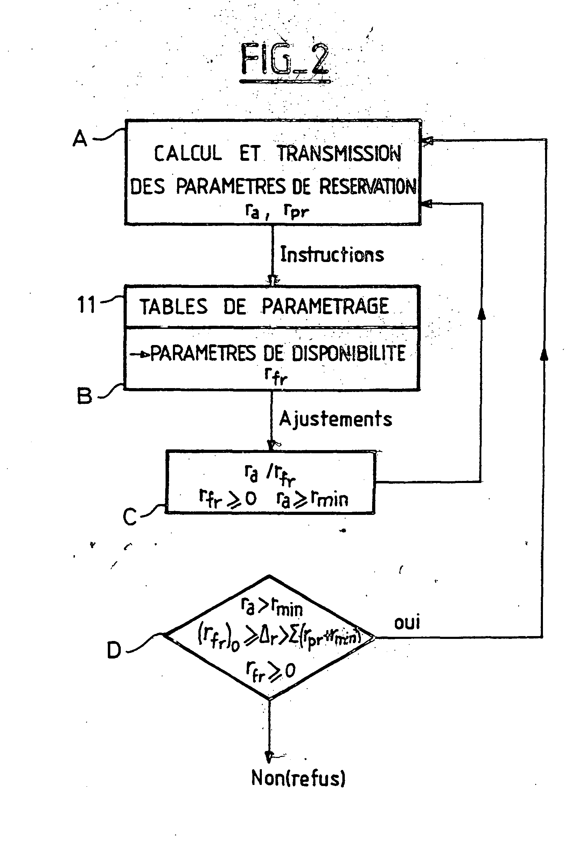

Le schéma synoptique illustré sur la figure 2 montre l'architecture de base du procédé de gestion des flux de données d'un réseau local partagé selon l'invention.

A l'étape A de cette architecture, chaque élément de réseau diffuse, vers chacun des autres éléments du réseau, les largeurs de bande réservées, pour le mode "best effort " et pour les modes privilégiés, des flux de données à transmettre à partir de ses applications.

Les deux paramètres de réservation diffusés sont, par exemple, les débits des réservoirs de "best effort" $r_a$, et la somme des débits privilégiés $r_{pr}$ (soit $r_b$ + $r_c$ + ...). Les éléments de réseau transmettent ainsi périodiquement la valeur des paramètres $r_a$ et $r_{pr}$, ainsi qu'une valeur minimale de r, appelée $r_{min}$.

A l'étape B, l'élément de réseau établit la largeur de bande disponible pour sa liaison. Chaque élément de réseau établit une table 11 de valeurs des paramètres $r_a$ et $r_{pr}$ de tous les éléments de réseau connus reliés au bus de liaison. Cette table 11 fournit la valeur de la largeur de bande disponible par calcul d'un paramètre $r_{fr}$ à partir de l'expression suivante :

$$r_{fr} = \frac{r_{max} - \sum (r_a + r_{pr})}{N}$$

dans laquelle $\Sigma$ représente la sommation des valeurs des débits indiqués à tous les éléments du réseau, $r_{max}$ la largeur de bande totale de l'élément sur le bus de liaison et N le nombre d'éléments du réseau.

A l'étape C, l'élément de réseau ajuste la valeur du paramètre de "best effort" $r_a$ en fonction de la variation du paramètre de largeur de bande disponible $r_{fr}$ de façon à préserver à cette dernière une valeur positive ou nulle, afin de pouvoir toujours transmettre. Dans l'exemple de réalisation, lorsque la valeur de $r_{fr}$ devient négative, l'élément de réseau diminue la valeur de $r_a$ de la valeur suivante, à condition que $r_a$ ne soit pas déjà à sa valeur minimale $r_{min}$:

$$\frac{r_a - r_{min}}{\sum (r_a - r_{min})} [1 - \sum (r_a + r_{pr})]$$

Après communication de la nouvelle valeur de $r_a$, l'élément du réseau ne recalcule sa valeur de disponibilité de bande $r_{fr}$ qu'après avoir reçu les transmissions des valeurs de débits $r_a$ des autres éléments pour obtenir une nouvelle valeur.

Lorsque de nouvelles réservations sont prévues, par exemple par une modification d'une application privilégiée d'un élément du réseau ou lorsqu'un nouvel élément est connecté, une étape D est appliquée dans l'exemple de réalisation afin de décider de l'acceptation ou du rejet des réservations correspondantes, comportant :

- la comparaison des valeurs des paramètres de "best effort" avec leur valeur minimale: un nouvel élément n'est pas admissible si tous les paramètres de "best effort" ra ont déjà été portés à leur valeur minimale $r_{min}$, car le paramètre de disponibilité $(r_{fr})_0$ du nouvel élément est alors nécessairement négatif;

- l'acceptation de l'augmentation de réservation d'un flux privilégié $\Delta r$, si elle est inférieure ou égale au paramètre de disponibilité $(r_{fr})_0$ de l'élément concerné ;

- le refus de cette augmentation de réservation si elle vérifie la condition: $\Delta r > \Sigma (r_{pr} + r_{min})$ au moins l'une des valeurs de disponibilité recalculées $r_{fr}$ reste négative après diminution des paramètres de "best effort".

Des étapes supplémentaires peuvent être prévues pour gérer des situations particulières ou optimiser la répartition des réservations :

- si deux éléments requièrent simultanément une même augmentation de réservation, ces requêtes peuvent être rejetées, alors qu'une seule aurait pu aboutir; il est possible de prévoir une relance aléatoire dans le temps des demandes de réservation ;
- dans le cas où la file d'attente en mode "best effort" est surchargée, une augmentation de $r_a$ par diminution du paramètre de disponibilité $r_{fr}$ peut être opérée, par exemple par mise à disposition de 50% de la valeur de $r_{fr}$;
- si la valeur réelle du paramètre de débit en mode "best effort" est sensiblement inférieur (par exemple plus de 10%) au paramètre de réservation $r_a$, une diminution de ce paramètre $r_a$ pour rester proche de sa valeur réelle permet d'utiliser en dynamique, c'est-à-dire en fonction des besoins, la bande disponible en mode "best effort" ;
- dans le cas où un risque de surcharge en mode "best effort" est raisonnablement prévisible, par exemple si de nombreux paquets en mode privilégié ne sont pas conformes aux formats des modes privilégiés dans une application particulière, ces paquets sont adressés en mode "best effort" si aucune diminution de $r_a$ n'est induite.

Par ailleurs certaines applications génèrent des pics de trafic avec un faible débit moyen et nécessitent une plus grande sécurité vis-à-vis des erreurs que celle offerte par le mode "best effort". Ces applications sont celles qui mettent en oeuvre des protocoles à diffusion, tels que RIP (initiales de Route Information Protocol (c'est-à-dire protocole de diffusion de route), et autres protocoles de routage), NTP (initiales de Network Time Protocol) ou RSVP. Les flux de données de ce type ne nécessitent pas de qualité de service particulière ou privilégiée. Ils ne requièrent qu'une priorité de transmission particulière.

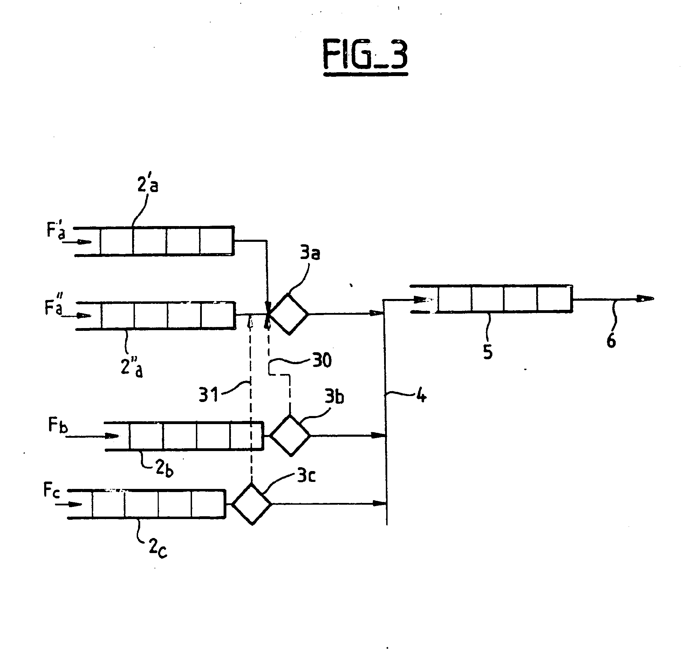

Il est alors possible d'utiliser en variante une structure de filtre de "token buckets" en mode "best effort" à plusieurs files, par exemple à deux files, comme schématisé sur la figure 3, reprenant la base de l'architecture illustrée en figure 1. Deux files d'attente 2'a et 2"a sont prévues devant le réservoir de jetons du mode "best effort" dans l'architecture présentée avec, respectivement, une priorité élevée pour les paquets de flux F'a de l'application particulière et une faible priorité pour les paquets de flux F"a à traiter classiquement en mode "best effort". Les liaisons en pointillés 30 et 31 indiquent respectivement des priorités de traitement équivalentes pour le "best effort" prioritaire 2'a et le mode privilégié 2b, pour le "best effort" non prioritaire F"a et le mode privilégié 2c.

Dans un exemple de mise en oeuvre sous UNIX[(r)] du procédé selon l'invention, le message transmis par un élément du réseau est composé de cinq nombres de 32 bits qui représentent, successivement la version du protocole utilisé et d'autres drapeaux (arrivée ou départ d'un élément de réseau), et les valeurs de $r_a$; $r_{min}$, $r_{pr}$, et $r_{max}$.

L'utilisation de nombres de 32 bits permet d'indiquer des valeurs de largeurs de bande allant jusqu'à 4 Gigaoctets/s. Une base de temps T = 10 s est utilisée pour commander les différents événements et la chronométrie.

Au départ, l'élément de réseau 1 (figure 1) envoie sur la liaison 8a le message ci-dessus décrit avec $r_{pr} = 0$, $r_a$ égal à $r_{min}$ et commence à écouter les messages provenant de la liaison 8b. Un message est envoyé toutes les 2T - $\Delta_t$, $\Delta_t$ appartenant à l'intervalle 0-1 seconde, afin d'éviter une synchronisation entre les différents éléments du réseau. Si nécessaire et si la valeur de disponibilité de bande $r_{fr}$ le permet, $r_a$ peut être ajusté avant d'envoyer un message.

Lorsqu'un message est reçu, la version du protocole est d'abord vérifiée. Si la version ou si la valeur de $r_{max}$ ne correspondent pas à celles prévues, un message d'erreur est formé. Si l'expéditeur du message est identifié, les valeurs correspondantes de la table de paramétrage sont mises à jour. Si l'expéditeur du message n'est pas connu, les informations du message viennent compléter la table.

Lors de changements de valeurs de réservation qui rendent négatif $r_{fr}$, les nouveaux paramètres ne sont pas recalculés avant un délai de T/2 soit 5s, sauf si $r_{fr}$ redevient positif. Si $r_{fr}$ reste négatif pendant plus de 3T/2 soit 15s, un message d'erreur est formé.

L'invention n'est pas limitée aux exemples de réalisation décrits et représentés. Elle peut par exemple s'appliquer à la gestion des bandes passantes dans des applications multimédia sur le réseau Internet en se basant sur des liaisons de type ATM (c'est-à-dire en Mode de Transfert Asynchrone).

L'invention peut également être utilisée pour la répartition et le contrôle de débit dans des environnements distribués asynchrones. Par exemple, l'ordonnancement des trafics aériens ou routiers dans lesquels l'invention peut directement s'appliquer en utilisant une base de temps plus grande adaptée aux systèmes contrôlés.

**Revendications**

1. Procédé de gestion de largeurs de bandes allouées d'un réseau (R) comprenant des postes d'applications, des bus de commutation (4) et de transmission de données (6),le réseau étant un réseau local à accès partagé et comportant des filtres de « token buckets » (1) en interface de sortie entre les postes d'application et le bus de transmission (6) au réseau (R), ledit procédé comportant les étapes suivantes :

- diffusion de chaque élément de réseau (10) vers chacun des autres éléments du réseau, par liaisons (8a, 8b) à travers le protocole (7), de valeurs de paramètres de largeurs de bande réservées, pour le mode « best effort » et pour les modes privilégiés, des flux de données à transmettre ;

- détermination par chaque élément de réseau de la valeur d'un paramètre de mesure de la largeur de bande disponible pour sa liaison (6), à partir d'une table (11) des valeurs des paramètres diffusées à l'étape précédente ;

- ajustement par l'élément de réseau de la valeur du paramètre de « best effort » en fonction de la variation du paramètre de largeur de bande disponible de façon à lui préserver une valeur positive ou nulle.

2. Procédé de gestion selon la revendication 1, dans lequel les paramètres de réservation diffusés sont les débits des réservoirs de « best effort » $r_a$, et la somme des débits privilégiés $r_{pr}$, les éléments de réseau (10) transmettant périodiquement la valeur des paramètres $r_a$ et $r_{pr}$, ainsi qu'une valeur minimale $r_{min}$ de $r_a$.

3. Procédé de gestion selon la revendication 1 ou 2, comportant une étape supplémentaire afin de décider de l'acceptation ou du rejet d'une augmentation de réservations, comportant:

    - la comparaison des valeurs des paramètres de « best efforts » avec leur valeur minimale : un nouvel élément n'est pas admissible si tous les paramètres de "best effort" sont déjà portés à leur valeur minimale $r_{min}$,
    - l'acceptation de l'augmentation de réservation d'un flux privilégié $\Delta r$, si elle est inférieure ou égale au paramètre de disponibilité $r_{fr}$ de l'élément ;
    - le refus de cette augmentation de réservation si elle vérifie la condition: $\Delta r > \Sigma(r_{pr} + r_{min})$ au moins l'une des valeurs de disponibilité recalculées $r_{fr}$ reste négative après diminution des paramètres de "best effort".

4. Procédé de gestion selon l'une quelconque des revendications précédentes, comportant l'étape supplémentaire suivante, dans le cas où deux éléments requièrent simultanément une même augmentation de réservation, une relance aléatoire dans le temps des demandes de réservation est activée.

5. Procédé de gestion selon l'une quelconque des revendications précédentes, comportant dans le cas où la file d'attente en mode "best effort" est surchargée, une étape supplémentaire d'augmentation de $r_a$ par diminution du paramètre de disponibilité $r_{fr}$ est activée

6. Procédé de gestion selon l'une quelconque des revendications précédentes, comportant l'étape supplémentaire suivante si la valeur réelle du paramètre de débit en mode "best effort" est sensiblement inférieur au paramètre de réservation $r_a$, une diminution de ce paramètre $r_a$ pour rester proche de sa valeur réelle

7. Procédé de gestion selon l'une quelconque des revendications précédentes, comportant l'étape supplémentaire suivante, dans le cas où un risque de surcharge en mode "best effort" est raisonnablement prévisible

    - ces paquets sont adressés en mode "best effort" si aucune diminution de $r_a$ n'est induite.

8. Système pour la mise en oeuvre du procédé selon l'une quelconque des revendications précédentes, comportant un réseau (R) local à accès partagé, le réseau comportant des postes d'applications, des bus de commutation (4) et de transmission de données (6), et une structure de "token buckets" (1) qui, en mode "best effort", comporte plusieurs files d'attente, avec une priorité élevée pour les paquets d'une application particulière et une faible priorité pour les autres paquets à traiter en mode "best effort", chaque élément de réseau comportant:

    - des moyens de diffusion, vers les autres éléments du réseau, par liaisons (8a, 8b) à travers le protocole (7), de valeurs de paramètres de largeurs de bande réservées pour le mode "best effort" et pour les modes privilégiés, des flux de données à transmettre;
    - des moyens de détermination de la valeur d'un paramètre de mesure de la largeur de bande disponible pour sa liaison (6), à partir d'une table (11) des valeurs des paramètres transmises à l'étape précédente; et
    - des moyens d'ajustement de la valeur du paramètre de "best effort "en fonction de la variation du paramètre de largeur de bande disponible de façon à lui préserver une valeur positive ou nulle.

9. Procédé de gestion des largeurs de bande selon l'une des revendications 1 à 7, réalisant un double échange d'informations entre chaque application pour ajuster les paramètres des "token buckets" en vue d'optimiser la charge d'occupation du réseau.

**Claims**

1. A method of managing the bandwidth allocated in a network (R) comprising applications stations, switching and data transmission buses (4,6), the network being a shared access local network and comprising token bucket filters (1) as output interfaces between the applications stations and the bus for transmission (6) to the network (R), the method comprising the following steps:

- each network element (10) broadcasting to each of the other network elements via connections (8a, 8b) through the protocol (7), values of reserved bandwidth parameters for best effort mode and for privileged modes concerning data streams to be transmitted;
- each network element determining the value of a parameter measuring the bandwidth available for its connection (6) on the basis of a table (11) of values for the parameters transmitted in the preceding step;
- the network element adjusting the value of its best effort parameter as a function of variation in its available bandwidth parameter so as to preserve a positive or zero value therefore.

2. The management method according to claim 1, wherein the reservation parameters that are broadcast are the best effort bucket rate $r_a$ and the sum of the privileged bucket rates $r_{pr}$, the network elements (10) periodically transmitting the values of the parameters $r_a$ and $r_{pr}$, together with a minimum value $r_{min}$ for $r_a$.

3. The management method according to claim 1 or 2, including an additional step to decide whether to accept or reject an increase of reservations, the step comprising:

- comparing the values of the best effort parameters with their minimum value, a new element being unacceptable if all of the best effort parameters are already at their minimum value $r_{min}$;
- accepting the reservation increase of a privileged stream $\Delta r$ if it is less than or equal to the availability parameter $r_{fr}$ of the element;
- refusing said reservation increase if

- it satisfies the condition: $\Delta r > \Sigma(r_{pr}+r_{min})$
- at least one of the recalculated availability values $r_{fr}$ remains negative after decreasing the best effort parameters.

4. The management method according to any one of preceding claims, including the following additional step when two elements simultaneously require the same increase of reservation, requests for reservation are repeated randomly in time.

5. The management method according to any one of preceding claims, including, when the best effort mode queue is overloaded, an additional step of increasing $r_a$ by decreasing the availability parameter $r_{fr}$ is activated.

6. The management method according to any one of preceding claims, including the following additional step if the real value of the best effort mode rate parameter is significantly less than the reservation parameter $r_a$, the parameter $r_a$ is decreased to remain close to its real value.

7. The management method according to any one of preceding claims, including the following additional step when a risk of overload in best effort mode is reasonably to be expected

- these packets are sent in best effort mode if that give rise to no decrease in $r_a$.

8. System for implementing the method according to any one of preceding claims, comprising a shared access local network (R), the network comprising applications stations, switching and data transmission buses (4, 6), and a token bucket structure (1), which, in best effort mode, has a plurality of queues, with a high priority for the pockets of a special application and a low priority for the other pockets to be processed in best effort mode, each network element comprising :

- means for broadcasting to the other network elements via connections (8a, 8b) through the protocol (7), values of reserved bandwidth parameters for best effort mode and for privileged modes concerning data streams to be transmitted;
- means for determining the value of a parameter measuring the bandwidth available for its connection (6) on the basis of a table (11) of values for the parameters transmitted in the preceding step; and
- means for adjusting the value of its best effort parameter as a function of variation in its available bandwidth parameter so as to preserve a positive or zero value therefore.

9. The management method according to any one of claims 1 to 7, implementing a both-way interchange of information with each application to adjust the token bucket parameters in order to optimize the occupancy loading of the network.

**Patentansprüche**

1. Verfahren zur Steuerung von Bandbreiten-Zuordnung eines Netzwerks (R), das Anwendungsstationen, Busse für Vermittlung (4) und Übertragung (6) von Daten aufweist, wobei das Netzwerk ein lokales Netzwerk mit gemeinsamem Zugriff ist und "token buckets"-Filter (1) an der Ausgabeschnittstelle zwischen den Anwendungsstationen und dem Übertragungsbus (6) zum Netzwerk (R) aufweist, wobei das Verfahren die folgenden Schritte aufweist:

- jedes Netzwerkelement (10) sendet zu jedem der anderen Elemente des Netzwerks über Verbindungen (8a,8b) über das Protokoll (7) Parameterwerte von reservierten Bandbreiten, für den "best effort"-Modus und für die privilegierten Modi, von zu übertragenden Datenflüssen;
- jedes Netzwerkelement bestimmt den Wert eines Meßparameters der für seine Verbindung (6) verfügbaren Bandbreite aus einer Tabelle (11) von im vorausgehenden Schritt gesendeten Parameterwerten;
- das Netzwerkelement paßt den Wert des "best effort"-Parameters in Abhängigkeit von der Veränderung des Parameters der verfügbaren Bandbreite so an, um ihm einen positiven oder Null-Wert zu bewahren

2. Steuerungsverfahren nach Anspruch 1, in welchem die gesendeten Reservierungsparameter die Datenraten der Reservoire "best effort" $r_a$ und die Summe der privilegierten Datenraten $r_{pr}$ sind, wobei die Netzwerkelemente (10) periodisch den Wert der Parameter $r_a$ und $r_{pr}$ sowie einen minimalen Wert $r_{min}$ von $r_a$ übertragen.

3. Steuerungsverfahren nach Anspruch 1 oder 2, mit einem zusätzlichen Schritt, um die Annahme oder Zurückweisung einer Erhöhung von Reservierungen zu entscheiden, mit

- dem Vergleich von Werten der "best effort"-Parameter mit ihrem minimalen Wert: ein neues Element ist nicht zulässig, falls alle "best effort"-Parameter bereits auf ihren minimalen Wert $r_{min}$ gebracht sind,
- der Annahme der Reservierungserhöhung eines privilegierten Flusses $\Delta r$, wenn sie kleiner oder gleich dem Verfügbarkeitsparameter $r_{fr}$ des Elements ist;
- der Zurückweisung dieser Reservierungserhöhung, falls sie die Bedingung $\Delta r > \Sigma(r_{pr} + r_{min})$ erfüllt und mindestens einer der neu kalkulierten Verfügbarkeitswerte $r_{fr}$ nach Verringerung der "best effort"-Parameter negativ bleibt.

4. Steuerungsverfahren nach einem der vorstehenden Ansprüche, aufweisend den folgenden zusätzlichen Schritt: für den Fall, daß zwei Elemente gleichzeitig eine gleiche Reservierungserhöhung erfordern, wird ein zufälliger Neustart in der Zeit der Reservierungsanforderungen aktiviert.

5. Steuerungsverfahren nach einem der vorstehenden Ansprüche, aufweisend: in dem Fall, daß die Warteschlange im "best effort"-Modus überlastet ist, wird ein zusätzlicher Erhöhungsschritt von $r_a$ durch Verringerung des Verfügbarkeitsparameters $r_{fr}$ aktiviert.

6. Steuerungsverfahren nach einem der vorstehenden Ansprüche, aufweisend den folgenden zusätzlichen Schritt, wenn der tatsächliche Wert des Datenrate-Parameters im "best effort"-Modus wesentlich kleiner als der Reservierungsparameter $r_a$ ist, eine Verringerung dieses Parameters $r_a$, um nahe an seinem tatsächlichen Wert zu bleiben.

7. Steuerungsverfahren nach einem der vorstehenden Ansprüche, aufweisend den folgenden zusätzlichen Schritt, in dem Fall, daß eine Gefahr der Überlastung im "best effort"-Modus vernünftigerweise vorhersehbar ist

- diese Pakete im "best effort"-Modus adressiert werden, falls keine Verringerung von $r_a$ eingeleitet ist.

8. System zur Durchführung des Verfahrens nach einem der vorstehenden Ansprüche, mit einem lokalen Netzwerk (R) mit gemeinsamem Zugriff, wobei das Netzwerk Anwendungsstationen, Busse für Vermittlung (4) und Übertragung (6) von Daten und eine "token buckets"-Struktur (1) aufweist, die im "best effort"-Modus mehrere Warteschlangen aufweist, mit einer erhöhten Priorität für die Pakete einer speziellen Anwendung und einer geringen Priorität für die anderen im "best effort"-Modus zu behandelnden Pakete, wobei jedes Netzwerkelement aufweist:

- Einrichtungen, um zu den anderen Netzwerkelementen über Verbindungen (8a, 8b) über das Protokoll (7) Parameterwerte für reservierte Bandbreiten, für den Modus "best effort" und für die privilegierten Modi, von zu übertragenden Datenflüssen zu senden;

Einrichtungen zum Bestimmen des Werts eines Meßparameters der verfügbaren Bandbreite für seine Verbindung (6) aus einer Tabelle (11) von Werten von im vorausgehenden Schritt übertragenen Parametern; und
Einrichtungen zur Anpassung des Werts des "best effort"-Parameters in Abhängigkeit von der Veränderung des Parameters für die verfügbare Bandbreite, um ihm einen positiven oder Null-Wert zu bewahren.

**9.** Steuerungsverfahren von Bandbreiten nach einem der Ansprüche 1 bis 7, das einen doppelten Austausch von Informationen zwischen jeder Anwendung realisiert, um die "token buckets"-Parameter hinsichtlich einer Optimierung der Belegungslast des Netzwerkes anzupassen.

## FIG_1

# FIG_2

A —

| CALCUL ET TRANSMISSION DES PARAMETRES DE RESERVATION $r_a$, $r_{pr}$ |

Instructions

11 —

| TABLES DE PARAMETRAGE |
| → PARAMETRES DE DISPONIBILITE $r_{fr}$ |

B —

Ajustements

C —

| $r_a / r_{fr}$ $r_{fr} \geqslant 0$ $r_a \geqslant r_{min}$ |

D —

$r_a > r_{min}$
$(r_{fr})_0 \geqslant \Delta_r \geqslant \Sigma (r_{pr} - r_{min})$
$r_{fr} \geqslant 0$

oui

Non(refus)

# FIG_3